# FASCICULE DE BREVET EUROPEEN

(11) **EP 3 862 063 B1**
(45) Date de publication et mention de la délivrance du brevet: **07.12.2022**
(21) Numéro de dépôt: 21154461.4
(22) Date de dépôt: 29.01.2021
(51) Int. Cl.: A63G 27/02

(54) **SOUS-ENSEMBLE MOBILE D'ACCUEIL ET DE CONVOYAGE D'AU MOINS UN PASSAGER, INSTALLATION D'ATTRACTION ASSOCIÉE ET SON PROCÉDÉ DE PILOTAGE**
MOBILE UNTERGRUPPE ZUR AUFNAHME UND BEFÖRDERUNG MINDESTENS EINES FAHRGASTES, ENTSPRECHENDE VERGNÜGUNGSANLAGE UND IHR STEUERUNGSVERFAHREN
MOBILE SUB-ASSEMBLY FOR WELCOMING AND TRANSPORTING AT LEAST ONE PASSENGER, ASSOCIATED ENTERTAINMENT SYSTEM AND ITS CONTROL METHOD

(30) Priorité: 10.02.2020 FR 2001281
(43) Date de publication de la demande: 11.08.2021
(73) Titulaire: POMA, 38340 Voreppe (FR)
(72) Inventeur: MUGNIER, Jean-François, 38340 Voreppe (FR)
(74) Mandataire: Alatis

(56) Documents cités:
- EP-A1- 2 075 043
- JP-A- 2009 279 112
- JP-A- 2010 005 316
- US-A1- 2013 023 350

## Description

### DOMAINE TECHNIQUE DE L'INVENTION

L'invention se rapporte au transport de passager dans une cabine suivant une trajectoire dont l'angle par rapport à l'horizontale n'est pas constant.

### ETAT DE LA TECHNIQUE ANTERIEURE

Dans le document DE476892 est décrite une installation d'attraction comportant une structure fixe, une structure mobile tournant par rapport à la structure fixe autour d'un axe de révolution, et des cabines sphériques supportées par la structure mobile de façon à tourner par rapport à la structure mobile autour d'un axe parallèle à l'axe de révolution. Le guidage en rotation de chaque cabine par rapport à la structure mobile est réalisé par l'intermédiaire d'un roulement de grand diamètre, qui entoure la cabine, et dont le chemin de roulement intérieur est fixé à la structure mobile et le chemin de roulement extérieur est solidaire de la cabine. Les cabines sont lestées de façon à ce que leur plancher reste plus ou moins horizontal lorsque la structure mobile tourne à faible vitesse autour de l'axe de révolution. Une faible oscillation des cabines autour de leur axe est autorisée, et même souhaitée pour l'amusement des passagers.

Pour stabiliser les cabines d'une grande roue et contrôler leur rotation autour de leur axe, il est proposé dans le document JP2010005316 de fixer à la bague intérieure fixe du roulement une couronne dentée, dont les dents sont orientées radialement vers l'intérieur, et d'installer sous le plancher de chaque cabine un dispositif motorisé d'entraînement de deux pignons engrenant avec la couronne dentée, et entraînés chacun par un moteur de stabilisation.

Un tel dispositif doit être analysé du point de vue de ses modes de défaillances, qui peuvent affecter notamment le ou les moteurs de stabilisation ou leur source d'alimentation. En pareille hypothèse, le plancher de la cabine peut prendre une inclinaison importante avant que l'arrêt de la grande roue permette une intervention. Il s'ensuit pour les passagers un désagrément non souhaitable.

### EXPOSE DE L'INVENTION

L'invention vise à remédier aux inconvénients de l'état de la technique et à proposer un système de stabilisation d'une cabine, qui permette, en cas de dysfonctionnement de la motorisation de stabilisation ou de son alimentation électrique, un retour du plancher de la cabine dans une position stable proche de l'horizontale.

Pour ce faire est proposé, selon un premier aspect de l'invention, un sous-ensemble mobile d'accueil et de convoyage d'au moins un passager, comprenant un support, une cabine et un guidage de la cabine par rapport au support en rotation autour d'un axe de référence commun au support et à la cabine, l'axe de référence étant horizontal lorsque le sous-ensemble mobile est dans un état opérationnel, le sous-ensemble mobile étant équipé d'un système de stabilisation comportant au moins une couronne dentée solidaire du support et centrée sur l'axe de référence, au moins un pignon lié à la cabine de manière à engrener avec la couronne dentée, un frein à friction pour freiner la rotation de la cabine autour de l'axe de référence par rapport au support, et des moyens d'entraînement motorisés aptes à entraîner le pignon, caractérisé en ce que les moyens d'entraînement motorisés comportent une machine synchrone à aimants permanents réversible et un circuit de commutation apte, dans un premier état de commutation, à relier des enroulements de la machine synchrone à une alimentation électrique de puissance pour une utilisation motrice de la machine synchrone et, dans un deuxième état de commutation, à relier les enroulements de la machine synchrone à un circuit ohmique dissipatif pour utilisation dissipative de la machine synchrone. La présence conjointe d'un frein à friction et d'une machine synchrone à aimants permanents apte à fonctionner en frein électromagnétique permet la mise en œuvre d'une manœuvre de redressement de la cabine, suite à une défaillance du moteur ou de son alimentation électrique. Dans un premier temps, on peut freiner le pignon de manière à arrêter la rotation du sous-ensemble mobile. Dans un deuxième temps, on peut, après avoir commuté la machine synchrone en mode dissipatif, libérer au moins partiellement, et de préférence totalement, le frein à friction et utiliser le frein électromagnétique constitué par la machine synchrone pour un freinage graduel alors que le sous-ensemble mobile rejoint sa position stable par gravité. Le cas échéant, le frein à friction peut être réappliqué lorsque la position stable a été trouvée.

De préférence, le circuit de commutation est monostable, et bascule ou reste dans le deuxième état de commutation en cas de coupure de l'alimentation électrique de puissance en amont du circuit de commutation. Suivant un mode de réalisation, le circuit de commutation comporte un contacteur électromécanique ou statique monostable. La commutation monostable du circuit d'alimentation permet d'assurer qu'en cas de défaillance de l'alimentation, le système de stabilisation bascule de lui-même dans un mode de fonctionnement dégradé dit gravitaire, dans lequel la machine synchrone fait office de frein électromagnétique.

Suivant divers modes de réalisation, le frein à friction peut présenter un élément de friction solidaire d'un arbre moteur de la machine synchrone, du pignon ou de la couronne dentée.

Suivant un mode de réalisation, que le frein à friction est commandé en tout ou rien. Le frein à friction est le cas échéant un simple frein de parking.

De préférence, le frein à friction est commandé par une commande monostable, et est par défaut, en l'absence de commande, en position fermée. La commande monostable du frein à friction comporte de préférence une source d'énergie autonome embarquée dans la cabine, qui permet de relâcher le frein à friction même en l'absence d'alimentation électrique de puissance de la machine synchrone.

Suivant un mode de réalisation, le pignon est lié à la cabine par un mécanisme d'accouplement apte à guider le pignon entre une position d'engagement avec la couronne dentée, dans laquelle le pignon est apte à engrener avec la couronne dentée en tournant autour d'un axe d'entraînement parallèle à l'axe de référence, et une position désaccouplée dans laquelle le pignon est à distance et désengagé de la couronne dentée. Le mécanisme d'accouplement guide le pignon entre la position d'engagement et la position désaccouplée suivant une trajectoire de préférence plane, qui peut être une translation, une rotation ou une combinaison de translation et de rotation. Suivant un mode de réalisation, le mécanisme d'accouplement est apte à guider un mouvement de pivotement du pignon autour d'un axe de pivotement parallèle à l'axe de référence, entre la position d'engagement et la position désaccouplée, l'axe de pivotement étant de préférence fixe par rapport à la cabine. On peut notamment prévoir que le mécanisme d'accouplement comporte un levier de guidage pivotant autour de l'axe de pivotement et portant un palier pour guider le pignon en rotation autour de l'axe d'entraînement.

De préférence, le mécanisme d'accouplement comporte un actionneur pour déplacer le pignon de la position d'engagement à la position désaccouplée. L'actionneur peut être de tout type, notamment électromécanique, hydraulique ou pneumatique, et de préférence télescopique. De préférence, l'actionneur est alimenté par une source d'énergie autonome embarquée dans la cabine, ce qui permet de manœuvrer le pignon même en cas de coupure de l'alimentation électrique de puissance de la machine synchrone.

Le mécanisme d'accouplement est de préférence bistable. Par mécanisme bistable, on entend un mécanisme ayant deux positions d'équilibre stable correspondant à la position d'accouplement et la position désaccouplée du premier pignon, et nécessitant de la part de l'actionneur un travail pour s'éloigner de l'une ou l'autre des positions d'équilibre stable vers une position intermédiaire d'équilibre instable.

En pratique, la machine synchrone à aimants permanents réversible comporte un carter, qui est soit fixe par rapport à la cabine, soit fixe par rapport à l'axe d'entraînement du pignon. Un carter moteur fixe par rapport à la cabine minimise l'énergie nécessaire au déplacement de l'équipage mobile constitué par le premier pignon. Mais il nécessite des précautions particulières pour limiter la transmission de vibrations ou de bruit à la cabine. Il nécessite de plus un organe de transmission apte à absorber les variations de positionnement entre le carter moteur et le premier pignon, par exemple un arbre de transmission à cardan liant le premier moteur au premier pignon. Un carter moteur fixe par rapport à l'axe d'entraînement du premier pignon permet de se passer d'un organe de transmission absorbant les variations de positionnement, mais impose le cas échéant une puissance plus élevée de l'actionneur. Par moteur, on entend ici également le cas échéant un motoréducteur.

Suivant un mode de réalisation particulièrement avantageux, le système de stabilisation comporte une branche supplémentaire comportant au moins un pignon supplémentaire lié à la cabine de manière à engrener avec une couronne dentée correspondante constituée par la couronne dentée ou par une couronne dentée supplémentaire, solidaire du support et centrée sur l'axe de référence, des moyens d'entraînement motorisés supplémentaires aptes à entraîner le pignon supplémentaire, les moyens d'entraînement motorisés supplémentaires comportant une machine synchrone à aimants permanents réversible supplémentaire, et un circuit de commutation supplémentaire apte, dans un premier état de commutation supplémentaire, à relier des enroulements de la machine synchrone supplémentaire à une alimentation électrique de puissance pour une utilisation motrice de la machine synchrone supplémentaire et, dans un deuxième état de commutation supplémentaire, à relier les enroulements de la machine synchrone supplémentaire à un circuit ohmique dissipatif pour utilisation dissipative de la machine synchrone supplémentaire. Le système de stabilisation comporte ainsi une redondance qui permet la mise en œuvre de divers modes de fonctionnement dégradé, ainsi que des procédures de diagnostic de défaillance.

Suivant un mode de réalisation, le pignon supplémentaire est lié à la cabine par un mécanisme d'accouplement supplémentaire de manière à se déplacer entre une position d'engagement avec la couronne dentée correspondante, dans laquelle le pignon supplémentaire est apte à engrener avec la couronne dentée correspondante en tournant autour d'un axe d'entraînement parallèle à l'axe de référence, et une position désaccouplée, dans laquelle le pignon supplémentaire est à distance et désengagé de la couronne dentée correspondante. La présence de deux mécanismes permet notamment d'envisager des procédés de pilotage en mode dégradé qui seront évoqués plus loin. Le mécanisme d'accouplement supplémentaire guide le pignon supplémentaire entre la position d'engagement et la position désaccouplée suivant une trajectoire qui peut être une translation, une rotation ou une combinaison de translation et de rotation. La trajectoire suit de préférence un mouvement plan. Suivant un mode de réalisation, le mécanisme d'accouplement supplémentaire supporte le pignon supplémentaire de manière telle que le pignon supplémentaire est apte à pivoter autour d'un deuxième axe de pivotement parallèle à l'axe de référence, entre la position d'engagement et la position désaccouplée du mécanisme d'accouplement supplémentaire, le deuxième axe de pivotement étant de préférence fixe par rapport à la cabine. On peut notamment prévoir que le mécanisme d'accouplement supplémentaire comporte un levier de guidage pivotant autour du deuxième axe de pivotement et portant un palier pour guider le pignon supplémentaire en rotation autour du deuxième axe d'entraînement.

De préférence, le mécanisme d'accouplement supplémentaire comporte un actionneur supplémentaire pour déplacer le pignon supplémentaire de la position d'engagement à la position désaccouplée, l'actionneur supplémentaire prenant de préférence appui sur la cabine. L'actionneur supplémentaire peut être de tout type, notamment électromécanique, hydraulique ou pneumatique, et de préférence télescopique.

Suivant un mode de réalisation particulièrement avantageux, le mécanisme d'accouplement supplémentaire comporte une transmission bistable entre l'actionneur supplémentaire et le pignon supplémentaire, comportant de préférence un levier de transmission pivotant autour d'un axe fixe par rapport à la cabine, et une bielle de transmission entre le levier de transmission du mécanisme d'accouplement supplémentaire et le pignon supplémentaire ou l'actionneur supplémentaire.

En pratique, la machine synchrone supplémentaire comporte un carter qui est soit fixe par rapport à la cabine, soit fixe par rapport à l'axe d'entraînement du pignon supplémentaire. Un carter moteur fixe par rapport à la cabine minimise l'énergie nécessaire au déplacement de l'équipage mobile constitué par le premier pignon. Mais il nécessite des précautions particulières pour limiter la transmission de vibrations ou de bruit à la cabine. Il nécessite de plus un organe de transmission apte à absorber les variations de positionnement entre le carter moteur et le premier pignon, par exemple un joint homocinétique ou arbre de transmission à double cardan liant le premier moteur au premier pignon. Un carter moteur fixe par rapport à l'axe d'entraînement du premier pignon permet de se passer d'un organe de transmission absorbant les variations de positionnement, mais impose le cas échéant une puissance plus élevée du premier actionneur. Par moteur, on entend ici également le cas échéant un motoréducteur.

De préférence, le mécanisme d'accouplement supplémentaire est indépendant du mécanisme d'accouplement. On entend par là que chacun des deux mécanismes d'accouplement du système de stabilisation est apte à déplacer le pignon correspondant indépendamment de la position de l'autre pignon.

Le cas échéant, le système de stabilisation peut également comporter un embrayage, pour accoupler chaque pignon au moteur associé et le désaccoupler du moteur associé.

Suivant un mode de réalisation, la cabine présente un volume intérieur d'accueil d'au moins un passager. De préférence, la couronne dentée entoure le volume intérieur d'accueil, vu en section dans un plan perpendiculaire à l'axe de référence.

Suivant un mode de réalisation, le guidage comporte au moins un roulement comportant une première bague de roulement solidaire du support, une deuxième bague de roulement solidaire de la cabine, et des corps de roulement aptes à rouler sur des chemins de roulement formés sur la première bague de roulement et la deuxième bague de roulement. De préférence, la deuxième bague de roulement entoure le volume intérieur d'accueil de la cabine.

Suivant un mode de réalisation, le premier pignon est supporté par la cabine de manière à engrener avec une zone de la couronne dentée qui est située au-dessus du premier pignon.

En positionnant le premier pignon sous la zone de la denture avec laquelle il engrène, on favorise la chute par gravité des éléments étrangers qui pourraient s'être posés sur la denture, avant qu'ils n'atteignent la zone d'engrènement avec le premier pignon.

Pour que cet effet de chute soit effectif, il est préférable que le premier pignon engrène avec une zone de la couronne dentée qui est à une distance suffisante du plan horizontal contenant l'axe de référence. De préférence, le premier axe d'entraînement est positionné, par rapport à un plan axial de référence et d'un premier côté du plan axial de référence, dans un secteur angulaire inférieur ou égal à 60° autour de l'axe de référence, le plan axial de référence étant vertical et contenant l'axe de rotation lorsque le sous-ensemble mobile est dans l'état opérationnel.

Suivant un mode de réalisation, le premier axe d'entraînement est positionné dans le plan axial de référence. Cette disposition sera particulièrement favorable si le sens de rotation de la cabine par rapport au support n'est pas toujours le même.

Suivant un autre mode de réalisation, le premier axe d'entraînement est positionné à distance du plan axial de référence, d'un premier côté du plan axial de référence. Cette disposition sera particulièrement favorable dès lors que le sens de rotation de la cabine par rapport au support est toujours le même, ou lorsqu'il existe un sens de rotation privilégié. Plus spécifiquement, on pourra choisir de positionner le premier pignon du côté du plan axial de référence situé en aval du plan axial de référence dans le sens de rotation de la roue dentée, ou en d'autres termes du côté du plan axial de référence dont s'éloigne la zone de la denture avec laquelle le premier pignon engrène. On s'assure ainsi que la zone de la denture avec laquelle le premier pignon engrène à un instant donné a traversé précédemment le plan axial de référence avec ses dents dirigées vers le bas, ce qui est la position la plus favorable pour s'assurer de la chute de tout objet étranger qui aurait pu se poser sur la denture.

Le cas échéant, un dispositif de nettoyage de la couronne dentée est positionné dans un secteur angulaire de la couronne dentée situé entre la zone de la denture avec laquelle le premier pignon engrène et un plan contenant l'axe de référence et horizontal lorsque le sous-ensemble mobile est dans l'état opérationnel. Un tel dispositif, situé de préférence immédiatement avant le pignon dans le sens de rotation de la couronne dentée, est disposé sous la zone de la denture avec laquelle il interagit, pour tirer parti de la pesanteur qui tend à évacuer les objets étrangers.

Suivant un mode de réalisation, un dispositif de détection d'obstacle à l'engrènement est positionné dans un secteur angulaire de la couronne dentée situé entre la zone de la denture avec laquelle le premier pignon engrène et un plan contenant l'axe de référence et horizontal lorsque le sous-ensemble mobile est dans l'état opérationnel. Au cas où la pesanteur ou l'éventuel dispositif de nettoyage se sont révélés insuffisants pour dégager un objet étranger piégé dans la graisse à la surface dentée de la couronne, le dispositif de détection d'obstacle permet d'arrêter le sous-ensemble mobile avant que l'objet étranger constituant obstacle n'entre en contact effectif avec le pignon.

De façon préférentielle, la cabine a un centre de gravité situé dans un plan axial de référence de la cabine, perpendiculaire au plancher et contenant l'axe de référence. Ceci est souhaitable pour limiter l'énergie nécessaire pour maintenir l'horizontalité du plancher avec le système de stabilisation.

De préférence, le centre de gravité de la cabine est situé sous l'axe de référence. On peut ainsi prévoir un mode dégradé de fonctionnement, dans lequel le système de stabilisation est désaccouplé ou permet au premier pignon de tourner librement, une horizontalité approximative étant préservée grâce à la pesanteur.

Suivant un mode de réalisation préféré, la couronne dentée présente une denture tournée vers l'axe de référence. De préférence, le premier pignon est positionné au-dessus d'un plafond intérieur de la cabine. On dispose alors d'un compartiment au-dessous du plancher, dans lequel il est possible le cas échéant de placer un lest de stabilisation. Suivant un mode de réalisation particulièrement avantageux, un groupe de réfrigération, chauffage ou climatisation de la cabine est positionné sous un plancher intérieur de la cabine. Un tel groupe, par sa masse, constitue un lest de stabilisation.

Suivant un mode de réalisation alternatif, la couronne dentée présente une denture tournée radialement vers l'extérieur, le premier pignon étant positionné au-dessous d'un plancher de la cabine.

Suivant un autre aspect de l'invention, celle-ci a trait à un sous-ensemble mobile d'accueil et de convoyage d'au moins un passager, comprenant un support, une cabine et un guidage de la cabine par rapport au support en rotation autour d'un axe de référence commun au support et à la cabine, l'axe de référence étant horizontal lorsque le sous-ensemble mobile est dans un état opérationnel, le sous-ensemble mobile étant équipé d'un système de stabilisation comportant au moins une couronne dentée solidaire du support et centrée sur l'axe de référence, au moins un pignon lié à la cabine de manière à engrener avec la couronne dentée, des premiers moyens d'entraînement motorisés aptes à entraîner le pignon, comportant un moteur comportant un arbre moteur tournant autour d'un axe fixe par rapport à la cabine et une chaîne cinématique de transmission entre l'arbre moteur et le pignon, caractérisé en ce que le système de stabilisation comporte un mécanisme d'accouplement apte à guider le pignon entre une position d'engagement avec la couronne dentée, dans laquelle le premier pignon est apte à engrener avec la première couronne dentée en tournant autour d'un axe d'entraînement parallèle à l'axe de référence, et une position désaccouplée dans laquelle le premier pignon est à distance et désengagé de la première couronne dentée, la chaîne cinématique de transmission comportant un joint de transmission. Un tel mécanisme d'accouplement offre l'avantage de pouvoir être actionné facilement et de façon visible de la position d'engagement à la position désaccouplée et de la position désaccouplé à ma position d'engagement, ce qui permet notamment d'envisager une procédure quotidienne de vérification du bon fonctionnement du mécanisme, dans le cadre d'opérations de mise en route de l'installation à laquelle la cabine est intégrée. Le mécanisme permet de découpler le moteur en cas de défaillance en vue d'effectuer certaines opérations de diagnostic de défaillance, et, le cas échéant, de provoquer un retour de la cabine dans une position approximativement horizontale, par gravité.

Suivant un mode de réalisation, le joint de transmission comporte un double cardan ou un joint homocinétique. De préférence, on fait en sorte qu'en position d'engagement, un élément d'entrée du joint de transmission, entraîné par l'arbre moteur, soit apte à tourner autour d'un axe d'entrée et un élément de sortie du joint de transmission, solidaire du pignon, soit apte à tourner autour de l'axe d'entraînement, l'axe d'entrée étant parallèle de l'axe d'entraînement et distant de l'axe d'entraînement.

Le mécanisme d'accouplement guide le pignon entre la position d'engagement et la position désaccouplée suivant une trajectoire de préférence plane, qui peut être une translation, une rotation ou une combinaison de translation et de rotation. Suivant un mode de réalisation, le mécanisme d'accouplement est apte à guider un mouvement de pivotement du pignon autour d'un axe de pivotement parallèle à l'axe de référence, entre la position d'engagement et la position désaccouplée, l'axe de pivotement étant de préférence fixe par rapport à la cabine. On peut notamment prévoir que le mécanisme d'accouplement comporte un levier de guidage pivotant autour de l'axe de pivotement et portant un palier pour guider le pignon en rotation autour de l'axe d'entraînement.

Naturellement, le mécanisme d'accouplement a vocation à être motorisé pour permettre un actionnement automatique suite à une commande donnée depuis la cabine ou à distance depuis un centre de contrôle de l'installation.

Suivant un mode de réalisation, le mécanisme d'accouplement comporte un actionneur pour déplacer le pignon de la position d'engagement à la position désaccouplée. L'actionneur est de préférence alimenté par une source d'énergie autonome embarquée dans la cabine, pour répondre à un risque de défaillance dans la transmission d'énergie depuis l'installation fixe à la cabine.

L'actionneur est de préférence irréversible, au sens où en l'absence d'alimentation énergétique, il reste bloqué en position.

Le mécanisme d'accouplement est de préférence bistable, ce qui évite de solliciter l'actionneur hors des séquences transitoire de changement de position.

Suivant un mode de réalisation, le système de stabilisation comporte au moins un pignon supplémentaire lié à la cabine de manière à engrener avec une couronne dentée correspondante constituée par la couronne dentée ou par une couronne dentée supplémentaire solidaire du support et centrée sur l'axe de référence, des moyens d'entraînement motorisés supplémentaire aptes à entraîner le pignon supplémentaire, comportant un moteur supplémentaire comportant un arbre moteur supplémentaire tournant autour d'un axe fixe par rapport à la cabine et une chaîne cinématique de transmission supplémentaire entre l'arbre moteur supplémentaire et le pignon supplémentaire, ainsi qu'un mécanisme d'accouplement supplémentaire apte à guider le pignon supplémentaire entre une position d'engagement avec la couronne dentée correspondante, dans laquelle le pignon supplémentaire est apte à engrener avec la couronne dentée correspondante en tournant autour d'un axe d'entraînement supplémentaire parallèle à l'axe de référence, et une position désaccouplée dans laquelle le pignon supplémentaire est à distance et désengagé de la couronne dentée correspondante, la chaîne cinématique de transmission supplémentaire comportant un joint de transmission. On obtient ainsi une redondance des fonctions de stabilisation. La présence de deux mécanismes permet notamment d'envisager des procédés de pilotage en mode dégradé qui seront évoqués plus loin.

Suivant un mode de réalisation, la couronne dentée correspondante est constituée par une couronne dentée supplémentaire centrée sur l'axe de référence et située axialement à distance de la couronne dentée.

Pour une utilisation optimale de l'espace, le moteur et le moteur supplémentaire sont de préférence placés tête-bêche, l'arbre moteur et l'arbre moteur supplémentaire étant parallèles mais non coaxiaux.

Le mécanisme d'accouplement supplémentaires présente de préférence des caractéristiques analogues à mécanisme d'accouplement.

Suivant un mode de réalisation, le mécanisme d'accouplement supplémentaire guide le pignon supplémentaire entre la position d'engagement et la position désaccouplée suivant une trajectoire de préférence plane, de préférence parallèle à la trajectoire plane du pignon, et qui peut être une translation, une rotation ou une combinaison de translation et de rotation. Suivant un mode de réalisation, le mécanisme d'accouplement supplémentaire supporte le pignon supplémentaire de manière telle que le pignon supplémentaire est apte à pivoter autour d'un deuxième axe de pivotement parallèle à l'axe de référence, entre la position d'engagement et la position désaccouplée du mécanisme d'accouplement supplémentaire, le deuxième axe de pivotement étant de préférence fixe par rapport à la cabine. On peut notamment prévoir que le mécanisme d'accouplement supplémentaire comporte un levier de guidage pivotant autour du deuxième axe de pivotement et portant un palier pour guider le pignon supplémentaire en rotation autour du deuxième axe d'entraînement.

De préférence, le mécanisme d'accouplement supplémentaire comporte un actionneur supplémentaire pour déplacer le pignon supplémentaire de la position d'engagement à la position désaccouplée, l'actionneur supplémentaire prenant de préférence appui sur la cabine. L'actionneur supplémentaire peut être de tout type, notamment électromécanique, hydraulique ou pneumatique, et de préférence télescopique.

Suivant un mode de réalisation particulièrement avantageux, le mécanisme d'accouplement supplémentaire comporte une transmission bistable entre l'actionneur supplémentaire et le pignon supplémentaire, comportant de préférence un levier de transmission pivotant autour d'un axe fixe par rapport à la cabine, et une bielle de transmission entre le levier de transmission du mécanisme d'accouplement supplémentaire et le pignon supplémentaire ou l'actionneur supplémentaire.

En pratique, la machine synchrone supplémentaire comporte un carter qui est soit fixe par rapport à la cabine, soit fixe par rapport à l'axe d'entraînement du pignon supplémentaire. Un carter moteur fixe par rapport à la cabine minimise l'énergie nécessaire au déplacement de l'équipage mobile constitué par le premier pignon. Mais il nécessite des précautions particulières pour limiter la transmission de vibrations ou de bruit à la cabine. Il nécessite de plus un organe de transmission apte à absorber les variations de positionnement entre le carter moteur et le premier pignon, par exemple un joint homocinétique ou arbre de transmission à double cardan liant le premier moteur au premier pignon. Un carter moteur fixe par rapport à l'axe d'entraînement du premier pignon permet de se passer d'un organe de transmission absorbant les variations de positionnement, mais impose le cas échéant une puissance plus élevée du premier actionneur. Par moteur, on entend ici également le cas échéant un motoréducteur.

De préférence, le mécanisme d'accouplement supplémentaire est indépendant du mécanisme d'accouplement. On entend par là que chacun des deux mécanismes d'accouplement du système de stabilisation est apte à déplacer le pignon correspondant indépendamment de la position de l'autre pignon.

Suivant un autre aspect de l'invention, celle-ci a trait à une installation d'attraction comportant au moins une structure fixe, comportant au moins un sous-ensemble mobile tel que décrit précédemment, entraîné et guidé par rapport à la structure fixe de façon à ce que le support du sous-ensemble mobile suive une trajectoire formant une boucle dans un plan vertical d'un référentiel fixe, et fasse, par rapport à un axe de révolution fixe perpendiculaire au plan vertical et parallèle à l'axe de référence, une rotation de 360° en parcourant un tour de la trajectoire en boucle.

Suivant un mode de réalisation, l'axe de rotation est fixe et défini de préférence par un ensemble d'un ou plusieurs paliers de guidage solidaires de la structure fixe. La rotation est de préférence sur plus d'un tour, notamment pour une installation d'attraction du type « grande roue ». Le support peut alors être un chariot destiné à être fixé à une jante de la grande roue, ou une partie de la jante elle-même, tournant autour de l'axe de rotation.

Suivant un autre aspect de l'invention, celle-ci a trait à un procédé de pilotage en mode dégradé d'une installation d'attraction telle que précédemment décrite, caractérisé en ce qu'en réponse à une détection de dysfonctionnement alors que le pignon engrène avec la couronne dentée, est initiée une procédure de fonctionnement dégradé comportant les opérations successives suivantes :
- un arrêt du support par rapport à la structure fixe ;
- une application du frein à friction ;
- à l'aide du circuit de commutation des enroulements, une connexion des enroulements de la machine synchrone au circuit ohmique ; puis
- un relâchement au moins partiel, et de préférence total, du frein à friction, alors que le pignon engrène avec la couronne dentée, la cabine étant amenée par gravité dans une position stable par rapport au support.

Cette première procédure de fonctionnement dégradé permet de retrouver une position stable gravitaire, qui dépend naturellement de la position des passagers dans la cabine, mais peut être proche de l'horizontale, alors que l'alimentation électrique de puissance de la première machine synchrone est déficiente.

Dans l'hypothèse d'une cabine dont le système de stabilisation comporte deux pignons motorisés, cette première procédure de fonctionnement dégradé sera mise en œuvre dans l'hypothèse d'une perte d'alimentation électrique de puissance des deux machines synchrones. La procédure pourra être mise en œuvre seulement sur le premier pignon et la première machine synchrone, ou simultanément sur les deux pignons et les deux machines synchrones.

De préférence, la procédure de fonctionnement dégradé comporte en outre, après arrêt de la cabine dans la position stable, un redémarrage de l'entraînement du support par rapport à la structure fixe. Le redémarrage de l'entraînement du support est effectué de préférence à vitesse réduite, et avec une surveillance constante de l'inclinaison de la cabine. Elle permet à la cabine de retourner à la plateforme de débarquement en préservant son horizontalité relative par gravité.

Suivant une première variante, la procédure de fonctionnement dégradé comporte en outre, après arrêt de la cabine dans la position stable, et avant redémarrage de l'entraînement du support par rapport à la structure fixe, un déplacement du pignon de la position d'engagement avec la couronne dentée à la position désaccouplée dans laquelle le pignon est à distance et désengagé de la couronne dentée. La cabine adapte sa position par gravité, les frottements au niveau des paliers de guidage de la cabine par rapport au support assurant la stabilisation de la cabine.

Suivant une deuxième variante, le pignon continue à engrener avec la couronne dentée et les enroulements de la machine synchrone restent connectés au circuit ohmique après redémarrage de l'entraînement du support par rapport à la structure fixe. La machine synchrone continue à fonctionner en frein électromagnétique.

Suivant un mode de réalisation, on prévoit en outre que la procédure de fonctionnement dégradé est interrompue et une deuxième procédure de fonctionnement dégradé est initiée si une condition de dysfonctionnement de la procédure de fonctionnement dégradée est détectée, la deuxième procédure de fonctionnement dégradé comportant les opérations suivantes :
- un arrêt du support par rapport à la structure fixe ;
- un déplacement du pignon de la position désaccouplée à la position d'engagement avec la couronne dentée,
- une application du frein, puis
- un redémarrage de l'entraînement du support par rapport à la structure fixe.

La deuxième procédure de fonctionnement dégradée peut être initiée notamment si la position atteinte par la cabine avant le redémarrage du support est hors d'une plage admissible, ou si, après redémarrage du support, l'inclinaison de la cabine n'est pas maintenue dans une plage admissible.

La deuxième procédure de fonctionnement dégradé permet d'arrêter tout mouvement de la cabine par rapport au support. Il sera alors possible de ramener le support jusqu'à la plateforme de débarquement à très basse vitesse. Dans la mesure où la cabine reste solidaire du support pendant ce trajet, aucune compensation d'inclinaison n'a lieu, ce qui peut être assez inconfortable pour les passagers. C'est pourquoi cette deuxième procédure de fonctionnement dégradé est réservée à des situations tout à fait exceptionnelles, dans lesquelles la première procédure de fonctionnement dégradé a échoué.

### BREVE DESCRIPTION DES FIGURES

D'autres caractéristiques et avantages de l'invention ressortiront à la lecture de la description qui suit, en référence aux figures annexées.
[Fig. 1] La figure 1 illustre une vue partielle d'une installation d'attraction selon l'invention.
[Fig. 2] La figure 2 est une vue en coupe axiale d'un sous-ensemble mobile de l'installation de la figure 1.
[Fig. 3] La figure 3 est une vue en coupe transversale du sous-ensemble mobile de la figure 2.
[Fig. 4] La figure 4 est un détail de la figure 3, illustrant en particulier l'implantation d'un système de stabilisation du sous-ensemble mobile de la figure 2.
[Fig. 5] La figure 5 est une vue de face du système de stabilisation de la figure 4, dans une position désaccouplée.
[fig. 6] La figure 6 est une vue isométrique du système de stabilisation du sous-ensemble mobile de la figure 4.
[Fig. 7] La figure 7 illustre un schéma électrique d'un circuit de commutation d'une machine synchrone du système de stabilisation.
[Fig. 8] La figure 8 est une vue isométrique de détail de l'intégration du système de stabilisation de la figure 4 dans le sous-ensemble mobile de la figure 2, dans une position engagée.
[Fig. 9] La figure 9 est une vue isométrique de détail de l'intégration du système de stabilisation de la figure 4 dans le sous-ensemble mobile de la figure 2, dans une position désaccouplée.

Pour plus de clarté, les éléments identiques ou similaires sont repérés par des signes de référence identiques sur l'ensemble des figures.

### DESCRIPTION DÉTAILLÉE DE MODES DE REALISATION

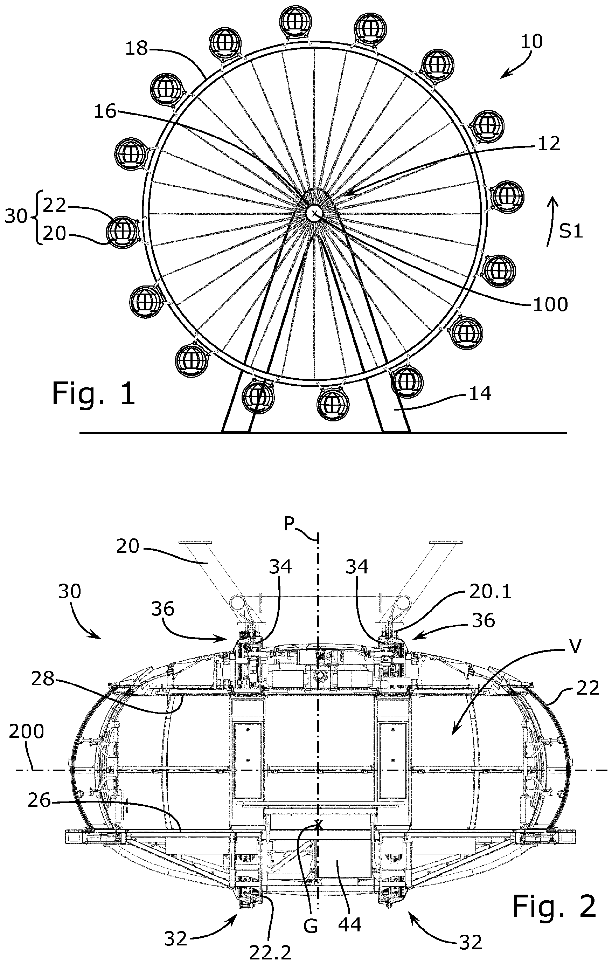

Sur la figure **1** est illustrée une installation de grande roue **10** à axe de révolution **100** horizontal, comportant une structure fixe **12** montée sur le sol l'intermédiaire d'un ou plusieurs pieds **14,** cette structure fixe **12** formant un palier de guidage **16** d'une jante de roue **18** en rotation autour d'un axe de révolution **100** fixe par rapport au sol **14.** La jante est pourvue à sa périphérie de supports **20** de cabines **22.** L'axe de révolution **100** constitue de préférence un axe de symétrie de révolution d'ordre N pour la jante, N étant le nombre de supports **20** et de cabines **22.**

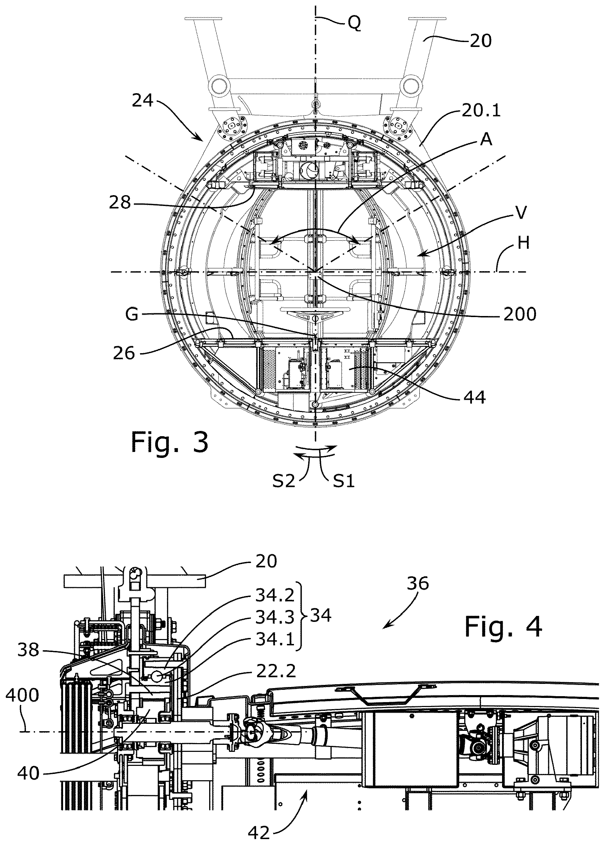

Comme illustré sur les figures **2** et **3****,** chaque cabine **22** présente un volume intérieur **V** d'accueil et de convoyage d'un ou plusieurs passagers, délimité entre un plancher de cabine **26** et un plafond de cabine **28.** Le support **20** et la cabine associée **22** forment ainsi un sous-ensemble mobile **30** d'accueil et de convoyage d'un ou plusieurs passagers. Ce sous-ensemble mobile **30** comporte en outre un guidage **32** de la cabine **22** par rapport au support **20** en rotation autour d'un axe de référence **200** commun au support **20** et à la cabine **22,** horizontal et parallèle à l'axe de révolution **100.**

Le guidage **32** est ici constitué par deux roulements coaxiaux **34** distants l'un de l'autre, de sorte que le centre de gravité de la cabine **22** se trouve entre deux plans verticaux transversaux perpendiculaires à l'axe de référence **200,** et coupant chacun l'un des deux roulements **34.** De préférence, les deux roulements **34** sont situés en position miroir l'un de l'autre par rapport à un plan vertical transversal médian **P** de la cabine **22,** perpendiculaire à l'axe de référence **200** et contenant le centre de gravité à vide **G** de la cabine **22.** Chaque roulement **34** comporte au moins une première bague de roulement, par exemple une bague intérieure **34.1,** solidaire d'un anneau **20.1** du support **20,** au moins une deuxième bague de roulement, par exemple une bague extérieure **34.2,** solidaire d'un anneau **22.2** la cabine **22,** et une ou plusieurs rangées de corps de roulement **34.3** aptes à rouler sur des chemins de roulement formés sur la première bague de roulement **34.1** et la deuxième bague de roulement **34.2.** Chacun des deux roulements **34** entoure le volume intérieur **V** de sorte qu'une partie de chaque roulement **34** se trouve sous le plancher **26,** et une autre au-dessus du plafond **28.**

Le guidage **32** permet de maintenir l'horizontalité du plancher de cabine **26** en autorisant la rotation du support **20** autour de l'axe de révolution **100** de la grande roue **10** dans un sens **S1** avec la rotation de la cabine **22** par rapport au support **20** autour de l'axe de référence **200** dans le sens opposé **S2.**

Pour synchroniser ces rotations, le sous-ensemble mobile **30** est équipé d'un système de stabilisation **36.** Ce système de stabilisation **36** est ici dédoublé et comporte deux couronnes dentées **38** solidaires des anneaux **20.1** du support **20** et centrées sur l'axe de référence **200,** positionnées de préférence chacune à proximité d'un des roulements **34.** À chacune des deux couronnes dentées **38** est associé un pignon **40,** monté sur la cabine **22** de manière à engrener avec la couronne dentée **38** associée. À chaque pignon **42** sont associés des moyens d'entraînement **42.**

Chaque pignon **40,** entraîné par les moyens d'entraînement motorisés **42,** engrène avec la couronne dentée **38** associée solidaire du support **20,** pour maintenir horizontal le plancher **26** de la cabine **22.**

Dans ce mode de réalisation, chaque couronne dentée **38** a une denture **38.1** tournée radialement vers l'intérieur, et le pignon **40** associé est situé au-dessus du plafond **28** de l'espace intérieur **V** de la cabine **22,** en prise avec une zone de la denture **38.1** située également au-dessus du plafond intérieur **28** de la cabine **22** et du pignon **40** associé. Ce positionnement permet d'éviter qu'un objet étranger, tombé sur la denture **38.1** dans la partie de la denture **38.1** située sous le plan horizontal **H** contenant l'axe de référence **200,** chemine jusqu'au pignon **40** et bloque ce dernier.

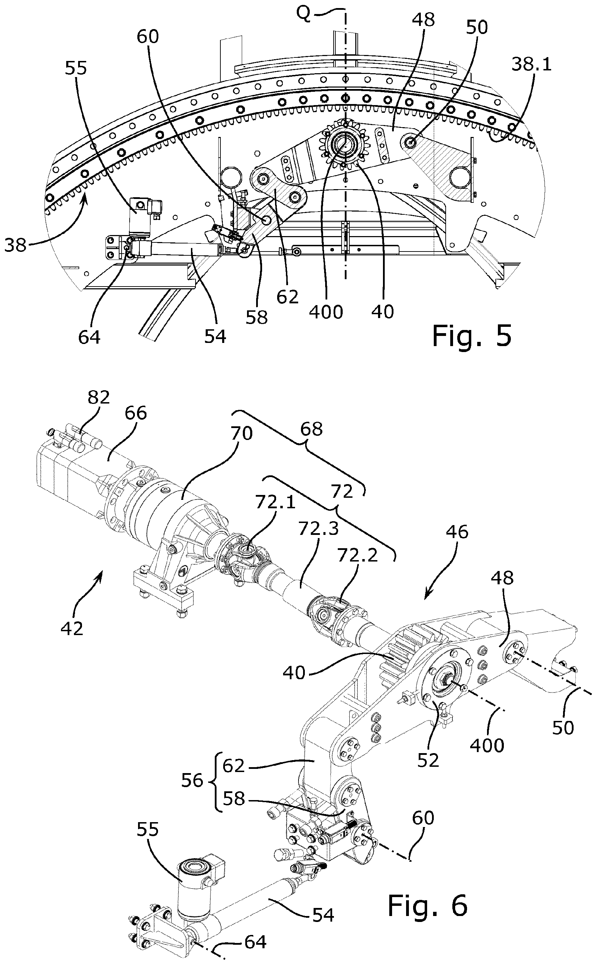

Les axes de rotation **400** des pignons **40** sont positionnés de préférence à proximité du plan axial de référence **Q,** soit directement dans le plan axial de référence **Q,** comme illustré sur la figure **5** soit d'un côté du plan axial de référence **Q,** dans un secteur angulaire **A** inférieur ou égal à ±**60°** par rapport au plan axial de référence, autour de l'axe de référence.

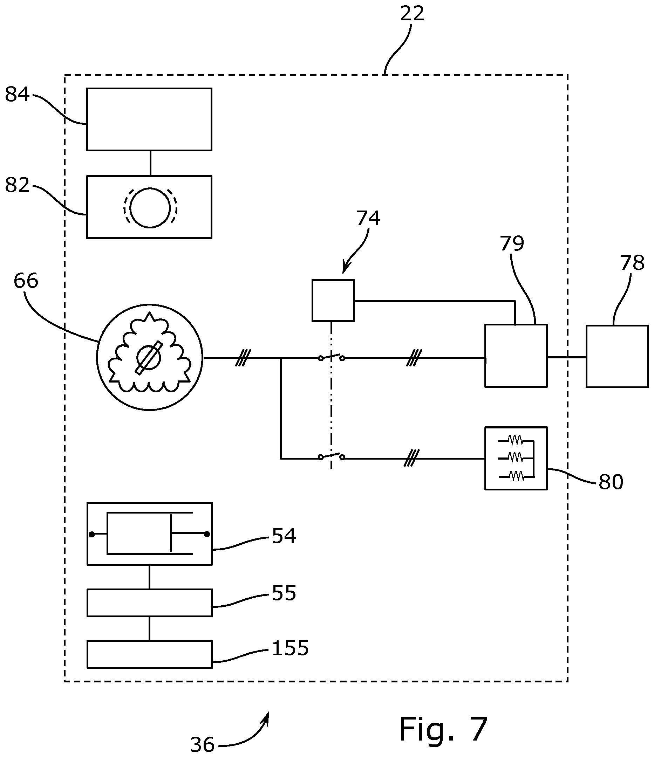

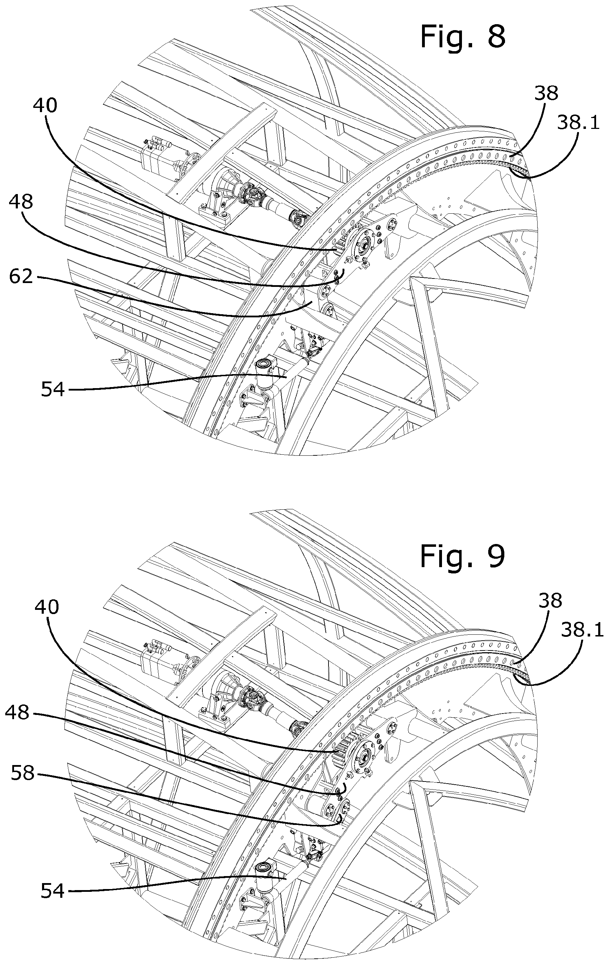

Chaque pignon **40** est lié à la cabine **22** par un mécanisme d'accouplement **46,** illustré en détail sur la figure **8****,** pour guider le pignon **40** entre une position d'engagement avec la couronne dentée associée **38** et une position désengagée. En position engagée, comme illustré sur la figure **7****,** le pignon **40** engrène avec la couronne dentée associée **38** alors qu'en position désengagée, illustrée sur les figures **5** et **9****,** le pignon **40** est à distance de la couronne dentée associée **38.**

Chaque mécanisme d'accouplement **46** comporte un levier de guidage **48** pivotant autour d'un axe de pivotement **50** fixe par rapport à la structure de la cabine **22.** Le levier de guidage **48** porte un palier **52** de guidage du pignon associé **40** en rotation autour d'un axe d'entraînement **400.**

Un actionneur **54,** accouplé à un moteur **55,** permet de faire pivoter le levier de guidage **48,** par l'intermédiaire d'une transmission bistable **56.** Dans ce mode de réalisation, la transmission bistable **56** comporte un levier de transmission **58** pivotant autour d'un axe **60** fixe par rapport à la cabine **22** et parallèle à l'axe de référence **200,** et une bielle de transmission **62** entre le levier de transmission et le levier de guidage **48.** Une première extrémité de l'actionneur **54** est montée pivotante par rapport à un axe **64** fixe par rapport à la cabine **22** et une extrémité opposée de l'actionneur **54** est articulée au levier de transmission **58.** Le sous-ensemble constitué par l'actionneur **55** et son dispositif de motorisation **55** est de préférence irréversible au sens où il n'est pas nécessaire de maintenir une alimentation énergétique pour le maintenir dans une position donnée. Ceci peut notamment être réalisé si l'actionneur est constitué par une vis sans fin irréversible. Le moteur **55** est quant à lui de préférence un moteur électrique. Bien sûr, l'homme du métier est en mesure de proposer de nombreuses variantes à ce dispositif, qui en conservent les fonctions. Les axes d'articulation et de pivotement étant parallèle à l'axe de référence **200,** le mouvement d'ensemble de chaque mécanisme d'accouplement **46** est un mouvement plan permettant de guider un pivotement de l'axe de rotation **400** du pignon associé **40** autour de l'axe de pivotement **50,** entre la position d'engagement et la position désaccouplée.

Les moyens d'entraînement motorisés **42** associés à chaque pignon **40** comportent une machine synchrone à aimants permanents réversible **66** dont l'arbre moteur, par l'intermédiaire d'une chaîne cinématique **68** comportant un réducteur **70** et un joint homocinétique **72** entraîne en rotation le pignon associé **40.** Dans ce mode de réalisation, le carter de la machine synchrone **66** est fixe par rapport à la cabine **22.** Le joint homocinétique **72** est réalisé ici de façon classique par deux joints de cardan **72.1, 72.2** reliés par un arbre **72.3** pour accommoder les mouvements du pignon **40** induits par le mécanisme d'accouplement **46.**

Un circuit de commutation de puissance **74,** illustré schématiquement sur la figure **7****,** permet, dans un premier état de commutation, de relier les enroulements statoriques **76** de la machine synchrone **66** à une alimentation électrique de puissance **78** extérieure à la cabine **22** par l'intermédiaire d'une commande de puissance **79,** pour une utilisation motrice de la première machine synchrone **66.** Le circuit de commutation **74** permet également, dans un deuxième état de commutation, de relier les enroulements statoriques **76** de la machine synchrone **66** à un circuit ohmique dissipatif **80** pour utilisation dissipative de la machine synchrone **66.**

Le circuit de commutation de puissance **74** est de préférence monostable, au sens où il nécessite une alimentation électrique depuis l'alimentation électrique de puissance **78** ou la commande de puissance **79** pour se maintenir dans le premier état, et qu'en l'absence d'alimentation électrique, il commute de lui-même dans le deuxième état. Le circuit de commutation **74** peut notamment comporter un contacteur électromécanique monostable ou un contacteur statique monostable.

Enfin, un frein à friction **82** à commande électromécanique ou hydraulique est positionné soit directement sur l'arbre moteur de la machine synchrone **66** soit dans la chaîne cinématique entre la machine synchrone **66** et le pignon **40,** soit sur la couronne dentée **38.** Le frein à friction **82** est de préférence monostable, normalement fermé, et est activé par une source d'énergie autonome embarquée **84,** qui peut le cas échéant alimenter également le moteur **55** de l'actionneur **54.** Alternativement, on peut prévoir pour le moteur **55** de l'actionneur une alimentation électrique autonome embarquée **155** distincte.

De préférence, les circuits d'alimentation et de commande pour les deux branches parallèles du système de stabilisation **36** sont indépendants.

Pour maintenir horizontal le plancher **26** de la cabine **22,** les moyens d'entraînement motorisés **42** peuvent être asservis à la position angulaire de la jante de roue **12** autour de l'axe de révolution **100** de la grande roue **10,** par exemple en comparant une mesure de la position angulaire de la cabine autour de l'axe de révolution et une mesure de la position angulaire de la cabine par rapport au support. À cet effet, l'un des roulements **34** peut être instrumenté pour délivrer une mesure de cette position angulaire. Alternativement, les moyens d'entraînement motorisés **42** peuvent être asservis à un inclinomètre positionné dans la cabine **22.** D'autres grandeurs physiques peuvent également être prises en compte pour commander les moyens d'entraînement motorisés **42,** notamment la charge de la cabine **22,** le positionnement du centre de gravité de la cabine **22** chargée, ou encore la vitesse et la direction du vent, ainsi que des données issues de la cabine **22** précédente dans le sens de la marche de la grande roue **10.**

L'énergie nécessaire est d'autant plus faible que le centre de gravité de la cabine **22** chargée est proche d'un plan axial de référence **Q** de la cabine **22,** perpendiculaire au plancher **26** et contenant l'axe de référence **200.** En pratique, le centre de gravité de la cabine **22** chargée se trouve en dessous d'un plan horizontal **H** contenant l'axe de référence **200,** entre l'axe de référence **200** et le plancher **26,** voire en dessous du plancher **26,** ce qui permet d'envisager un mode dégradé de fonctionnement, dans lequel, en cas de dysfonctionnement des moyens d'entraînement motorisés **42,** l'effet de la pesanteur permet un maintien plus ou moins horizontal du plancher **26.** À cet effet, l'espace situé sous le plancher est occupé par un groupe de réfrigération, chauffage ou climatisation **44** de la cabine **22,** dont le poids contribue à abaisser le centre de gravité de la cabine **22.**

La redondance des deux branches du système de stabilisation **36** augmente la disponibilité de l'installation. En l'absence de défaillance, les deux moteurs fonctionnent en mode maître-esclave. Lorsqu'un moteur **42** est défaillant, le pignon **40** associé est découplé et l'autre moteur **42** assure seul le positionnement de la cabine **22.** De façon similaire, dans l'hypothèse où un objet étranger viendrait s'interposer entre l'un des pignons **40** et la denture associée **38.1,** malgré le positionnement du pignon **40** en dessous de la denture **38.1,** le mécanisme d'accouplement **46** permet de désengager le pignon **40** impliqué, et l'autre pignon **40** assure seul le positionnement de la cabine **22.**

On peut d'ailleurs prévoir une procédure de diagnostic de défaillance dans l'hypothèse où l'on observe un dysfonctionnement du système de stabilisation se traduisant par une inclinaison du plancher de la cabine au-delà d'un seuil prédéterminé. On procède alors comme suit :
- on arrête tout d'abord la jante de roue **18** pour provoquer un arrêt du support **20** par rapport à la structure fixe **12** ;
- on coupe l'alimentation électrique de puissance **78** des deux machines synchrones **66** ;
- à l'arrêt, on applique les deux freins à friction **82** ;
- on découple l'un des deux pignons **40** de la couronne dentée **38** associée ;
- on alimente la machine synchrone **66** liée à l'autre pignon **40** de manière à rétablir la commande de stabilisation et on observe si l'horizontalité de la cabine **22** se rétablie ;
- si tel est le cas, on redémarre la grande roue **10** ;
- sinon, on réaccouple le pignon **40** qui était désaccouplé et on découple le pignon **40** qui était accouplé
- on alimente la machine synchrone **66** liée au pignon **40** accouplé de manière à rétablir la commande de stabilisation et on observe si l'horizontalité de la cabine **22** se rétablie ;
- si tel est le cas, on redémarre la grande roue **10** ;
- sinon, la défaillance rencontrée touche les deux branches du système de stabilisation **36** et nécessite la mise en œuvre d'une procédure de fonctionnement dégradé.

À cet effet, on prévoit, en cas de défaillance de l'alimentation en puissance **78** des deux machines asynchrones **66,** la mise en œuvre d'une procédure de fonctionnement dégradé, dite gravitaire, comportant les étapes suivantes :
- on arrête tout d'abord la jante de roue **18** pour provoquer un arrêt du support **20** par rapport à la structure fixe **12** ;
- à l'arrêt, on applique les deux freins à friction **82** ;
- à l'aide des circuits de commutation **74,** on branche les enroulements **76** de chacune des deux machines synchrones **66** au circuit ohmique associé **80 ;** puis
- on relâche au moins partiellement les frein à friction **82,** alors que le premier pignon **40** engrène avec la première couronne dentée **38,** la cabine **22** étant amenée par gravité dans une position stable par rapport au support **20.**

La cabine **22** se met alors en mouvement sous l'effet de la pesanteur, de manière à aligner son centre de gravité dans un plan vertical contenant l'axe de référence **200.** Dans cette phase, les deux machines synchrones **66** constituent des freins électromagnétiques, générant un couple de freinage proportionnel à la vitesse de rotation de la cabine **22.**

Cette procédure est mise en œuvre de préférence sous surveillance du personnel de l'installation, en liaison audio ou visuelle avec les passagers de la cabine **22,** suite à un signal de dysfonctionnement, qui peut être un signal de diagnostic de l'alimentation électrique des machines synchrones ou un signal relatif à l'horizontalité du plancher de la cabine **22.** Le cas échéant, des instructions peuvent être données aux passagers pour répartir la charge dans la cabine **22** de façon à ce que la position stable de la cabine corresponde à une position horizontale du plancher **26.**

Une fois que la cabine **22** s'est arrêtée dans une position stable, on peut redémarrer la grande roue **10,** à vitesse réduite, pour ramener la cabine défectueuse au niveau de l'aire d'embarquement et de débarquement. Durant cette phase de mouvement de la grande roue, diverses stratégies sont possibles pour tenter de préserver une horizontalité relative du plancher **26** de la cabine **22.** Une première stratégie consiste à conserver les pignons **40** en prises avec les couronnes dentées **38,** et les machines synchrones **66** en mode de freinage électromagnétique, pour amortir les mouvements de la cabine **22** dans cette phase. Une deuxième stratégie consiste à désengager les pignons **40** avant le redémarrage de la grande roue **10.**

Dans l'hypothèse où la procédure de fonctionnement dégradé gravitaire ne permet pas d'obtenir le repositionnement recherché de la cabine **22,** est prévue un mode de fonctionnement dégradé subsidiaire, qui consiste à réengager les pignons **40** avec les couronnes dentées associées **38,** puis à appliquer les freins à friction **82** pour solidariser la cabine **22** au support **20,** avant de redémarrer la grande roue **10.** Ce mode de fonctionnement, beaucoup moins confortable que le précédent, a pour effet de modifier l'orientation du plancher **26** au fur et à mesure de la rotation de la grande roue. Il nécessite donc une communication avec les passagers de la cabine pendant toute l'opération, qui doit être menée à très basse vitesse.

On notera que le mode de fonctionnement dégradé gravitaire et le mode de fonctionnement dégradé subsidiaire peuvent également être envisagés avec une seule machine synchrone **66** et un seul pignon **40.**

Naturellement, les exemples représentés sur les figures et discutés ci-dessus ne sont donnés qu'à titre illustratif et non limitatif. Il est explicitement prévu que l'on puisse combiner entre eux les différents modes de réalisation illustrés pour en proposer d'autres.

Suivant un mode de réalisation simplifié, le système de stabilisation **24** peut ne comporter qu'une seule couronne dentée **38** associée à un pignon **40** unique. La couronne est alors positionnée de préférence à proximité d'un plan transversal contenant le centre de gravité de la cabine **22** à vide. Si le guidage **32** comporte deux roulements **34,** la couronne dentée unique **38** est de préférence positionnée axialement entre les deux roulements **34.**

La bague de chaque roulement solidaire de la cabine **22** peut être la bague intérieure **34.1** ou la bague extérieure **34.2.**

L'axe de rotation du pignon **40** est de préférence parallèle à l'axe de référence **200,** bien qu'une orientation différente soit également envisageable si l'engrenage réalisé entre la couronne dentée **38** et le pignon **40** est à renvoi d'angle.

Le support n'est pas nécessairement une partie de la jante **12** d'une grande roue **10.** Il peut également s'agir d'un chariot mobile sur une piste de guidage d'une structure fixe du type décrit dans le document EP 2 075 043, formant une boucle fermée, circulaire ou non, dans un plan vertical. Dans toutes les configurations envisagées, le mouvement du support **20** en boucle se traduit par une rotation du support **20** par rapport à un référentiel fixe d'un tour par tour de boucle parcourue.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Sous-ensemble mobile (30) d'accueil et de convoyage d'au moins un passager, comprenant un support (20), une cabine (22) et un guidage (32) de la cabine (22) par rapport au support (20) en rotation autour d'un axe de référence (200) commun au support (20) et à la cabine (22), l'axe de référence (200) étant horizontal lorsque le sous-ensemble mobile (30) est dans un état opérationnel, le sous-ensemble mobile (30) étant équipé d'au moins un système de stabilisation (36) comportant une couronne dentée (38) solidaire du support (20) et centrée sur l'axe de référence (200), au moins un pignon (40) lié à la cabine (22) de manière à engrener avec la couronne dentée (38), un frein à friction (82) pour freiner la rotation de la cabine autour de l'axe de référence (200) par rapport au support (20), et des moyens d'entraînement motorisés (42) aptes à entraîner le pignon (40), **caractérisé en ce que** les moyens d'entraînement motorisés (42) comportent une machine synchrone à aimants permanents réversible (66) et un circuit de commutation (74) apte, dans un premier état de commutation, à relier des enroulements (76) de la machine synchrone (66) à une alimentation électrique de puissance (78) pour une utilisation motrice de la machine synchrone (66) et, dans un deuxième état de commutation, à relier les enroulements (76) de la machine synchrone (66) à un circuit ohmique dissipatif (80) pour utilisation dissipative de la machine synchrone (66).

2. Sous-ensemble mobile (30) selon la revendication 1, **caractérisé en ce que** le circuit de commutation (74) est monostable, et bascule ou reste dans le deuxième état de commutation en cas de coupure de l'alimentation électrique de puissance (78) en amont du circuit de commutation.

3. Sous-ensemble mobile (30) selon la revendication 2, **caractérisé en ce que** le circuit de commutation (74) comporte un contacteur électromécanique ou statique monostable.

4. Sous-ensemble mobile (30) selon l'une quelconque des revendications précédentes, **caractérisé en ce que** le frein à friction (82) est commandé en tout ou rien.

5. Sous-ensemble mobile (30) selon l'une quelconque des revendications précédentes, **caractérisé en ce que** le frein à friction (82) est commandé par une commande monostable.

6. Sous-ensemble mobile (30) selon la revendication 5, **caractérisé en ce que** la commande monostable du frein à friction (82) comporte une source d'énergie autonome (84) embarquée dans la cabine (22).

7. Sous-ensemble mobile (30) selon l'une quelconque des revendications précédentes, **caractérisé en ce que** le pignon (40) est lié à la cabine (22) par un mécanisme d'accouplement (46) apte à guider le pignon (40) entre une position d'engagement avec la couronne dentée, dans laquelle le pignon (40) est apte à engrener avec la couronne dentée (38) en tournant autour d'un axe d'entraînement (400) parallèle à l'axe de référence (200), et une position désaccouplée dans laquelle le pignon (40) est à distance et désengagé de la couronne dentée (38).

8. Sous-ensemble mobile (30) selon l'une quelconque des revendications précédentes, **caractérisé en ce que** le système de stabilisation (36) comporte au moins un pignon supplémentaire (40) lié à la cabine (22) de manière à engrener avec une couronne dentée correspondante constituée par la couronne dentée (38) ou par une couronne dentée supplémentaire solidaire du support (20) et centrée sur l'axe de référence (200), des moyens d'entraînement motorisés supplémentaires (42) aptes à entraîner le pignon supplémentaire (40), les moyens d'entraînement motorisés supplémentaires (42) comportant une machine synchrone à aimants permanents réversible supplémentaire (66), et un circuit de commutation supplémentaire (74) apte dans un premier état de commutation supplémentaire, à relier des enroulements de la machine synchrone supplémentaire (66) à une alimentation électrique de puissance (78) pour une utilisation motrice de la machine synchrone supplémentaire (66) et, dans un deuxième état de commutation supplémentaire, à relier les enroulements de la machine synchrone supplémentaire (66) à un circuit ohmique dissipatif pour utilisation dissipative de la machine synchrone supplémentaire (66).

9. Installation d'attraction (10) comportant au moins une structure fixe (12), **caractérisé en ce qu'**elle comporte au moins un sous-ensemble mobile (30) selon l'une quelconque des revendications précédentes, entraîné et guidé par rapport à la structure fixe (12) de façon à ce que le support (20) du sous-ensemble mobile (30) suive une trajectoire formant une boucle dans un plan vertical d'un référentiel fixe, et fasse, par rapport à un axe de révolution (100) fixe perpendiculaire au plan vertical et parallèle à l'axe de référence (200), une rotation de 360° en parcourant un tour de la trajectoire en boucle.

10. Procédé de pilotage en mode dégradé d'une installation d'attraction selon la revendication 1, **caractérisé en ce qu'**en réponse à une détection de dysfonctionnement alors que le pignon (40) engrène avec la couronne dentée (38), est initiée une procédure de fonctionnement dégradé comportant les opérations successives suivantes :
- un arrêt du support (20) par rapport à la structure fixe (12) ;
- une application du frein à friction (82) ;
- à l'aide du circuit de commutation (74), une connexion des enroulements (76) de la machine synchrone (66) au circuit ohmique ; puis
- un relâchement au moins partiel, et de préférence total, du frein à friction (82), alors que le pignon (40) engrène avec la couronne dentée (38), la cabine étant amenée par gravité dans une position stable par rapport au support (20).

11. Procédé de pilotage selon la revendication 10, **caractérisé en ce que** la procédure de fonctionnement dégradé comporte en outre, après arrêt de la cabine (22) dans la position stable, un redémarrage de l'entraînement du support (20) par rapport à la structure fixe (12).

12. Procédé de pilotage selon la revendication 11, le sous-ensemble mobile (30) étant selon l'une quelconque des revendications 7 à 8, **caractérisé en ce que** la procédure de fonctionnement dégradé comporte en outre, après arrêt de la cabine (22) dans la position stable, et avant redémarrage de l'entraînement du support (20) par rapport à la structure fixe (12), un déplacement du pignon (40) de la position d'engagement avec la couronne dentée (38) à la position désaccouplée dans laquelle le pignon (40) est à distance et désengagé de la couronne dentée (38).

13. Procédé de pilotage selon la revendication 12, **caractérisé en ce que** le pignon (40) continue à engrener avec la couronne dentée (38) et les enroulements de la machine synchrone restent connectés au circuit ohmique après redémarrage de l'entraînement du support (20) par rapport à la structure fixe (12).

14. Procédé de pilotage selon l'une quelconque des revendications 10 à 13, **caractérisé en ce que** la procédure de fonctionnement dégradé est interrompue et une procédure de fonctionnement dégradé subsidiaire est initiée si une condition de dysfonctionnement de la procédure de fonctionnement dégradée est détectée, la procédure de fonctionnement dégradé subsidiaire comportant les opérations suivantes :
- un arrêt du support (20) par rapport à la structure fixe (12) ;
- un déplacement du pignon (40) de la position désaccouplée à la position d'engagement avec la couronne dentée (38),
- une application du frein (82), puis
- un redémarrage de l'entraînement du support (20) par rapport à la structure fixe (12).

## Patentansprüche

1. Bewegbare Unterbaugruppe (30) zum Aufnehmen und Befördern von mindestens einem Passagier, umfassend einen Träger (20), eine Kabine (22) und eine Führung (32) der Kabine (22) an dem Träger (20), die sich um eine für den Träger (20) und die Kabine (22) gemeinsame Referenzachse (200) dreht, wobei die Referenzachse (200) horizontal ist, wenn sich die bewegbare Unterbaugruppe (30) in einem Betriebszustand befindet, wobei die bewegbare Unterbaugruppe (30) mit mindestens einem Stabilisierungssystem (36) ausgestattet ist, das einen Zahnkranz (38), der mit dem Träger (20) fest verbunden und auf der Referenzachse (200) zentriert ist, mindestens ein Ritzel (40), das mit der Kabine (22) verbunden ist, so dass es mit dem Zahnkranz (38) kuppelt, eine Reibungsbremse (82) zum Bremsen der Drehung der Kabine um die Referenzachse (200) an dem Träger (20) und motorisierte Antriebsmittel (42) aufweist, die geeignet sind, das Ritzel (40) anzutreiben, **dadurch gekennzeichnet, dass** die motorisierten Antriebsmittel (42) eine reversible Synchronmaschine mit Permanentmagneten (66) und einen Schaltkreis (74) aufweisen, der geeignet ist, in einem ersten Schaltzustand, Wicklungen (76) der Synchronmaschine (66) mit einer elektrischen Stromversorgung (78) für eine Triebwagenverwendung der Synchronmaschine (66) zu verbinden, und, in einem zweiten Schaltzustand, die Wicklungen (76) der Synchronmaschine (66) mit einer dissipativen ohmschen Schaltung (80) für eine dissipative Verwendung der Synchronmaschine (66) zu verbinden.

2. Bewegbare Unterbaugruppe (30) nach Anspruch 1, **dadurch gekennzeichnet, dass** der Schaltkreis (74) monostabil ist und bei Unterbrechung der elektronischen Stromversorgung (78) stromaufwärts des Schaltkreises in den zweiten Schaltzustand schaltet oder in diesem verbleibt.

3. Bewegbare Unterbaugruppe (30) nach Anspruch 2, **dadurch gekennzeichnet, dass** der Schaltkreis (74) ein monostabiles elektromechanisches oder statisches Schütz aufweist.

4. Bewegbare Unterbaugruppe (30) nach einem der vorstehenden Ansprüche, **dadurch gekennzeichnet, dass** die Reibungsbremse (82) im Ein/Aus-Modus gesteuert wird.

5. Bewegbare Unterbaugruppe (30) nach einem der vorstehenden Ansprüche, **dadurch gekennzeichnet, dass** die Reibungsbremse (82) durch eine monostabile Steuerung gesteuert wird.

6. Bewegbare Unterbaugruppe (30) nach Anspruch 5, **dadurch gekennzeichnet, dass** die monostabile Steuerung der Reibungsbremse (82) eine unabhängige Energiequelle (84) aufweist, die in die Kabine (22) eingebaut ist.

7. Bewegbare Unterbaugruppe (30) nach einem der vorstehenden Ansprüche, **dadurch gekennzeichnet, dass** das Ritzel (40) mit der Kabine (22) durch einen Kopplungsmechanismus (46) verbunden ist, der geeignet ist, das Ritzel (40) zwischen einer Eingriffsposition mit dem Zahnkranz, in der das Ritzel (40) geeignet ist, mit dem Zahnkranz (38) zu kuppeln, indem es um eine Antriebsachse (400) parallel zu der Referenzachse (200) rotiert, und einer entkoppelten Position zu führen, in der das Ritzel (40) in einem Abstand von dem Zahnkranz (38) und von diesem gelöst ist.

8. Bewegbare Unterbaugruppe (30) nach einem der vorstehenden Ansprüche, **dadurch gekennzeichnet, dass** das Stabilisierungssystem (36) mindestens ein zusätzliches Ritzel (40), das mit der Kabine (22) verbunden ist, so dass es mit einem entsprechenden Zahnkranz kuppelt, der aus dem Zahnkranz (38) oder einem zusätzlichen Zahnkranz besteht, der mit dem Träger (20) fest verbunden und auf der Referenzachse (200) zentriert ist, zusätzliche motorisierte Antriebsmittel (42), die geeignet sind, das zusätzliche Ritzel (40) anzutreiben, wobei die zusätzlichen motorisierten Antriebsmittel (42) eine zusätzliche umkehrbare Permanentmagnet-Synchronmaschine (66) aufweisen, und einen zusätzlichen Schaltkreis (74) aufweist, der geeignet ist, in einem ersten zusätzlichen Schaltzustand, Wicklungen der zusätzlichen Synchronmaschine (66) mit einer elektrischen Stromversorgung (78) für eine Triebwagenverwendung der zusätzlichen Synchronmaschine (66) zu verbinden und, in einem zweiten zusätzlichen Schaltzustand, die Wicklungen der zusätzlichen Synchronmaschine (66) mit einer dissipativen ohmschen Schaltung für die dissipative Verwendung der zusätzlichen Synchronmaschine (66) zu verbinden.

9. Vergnügungsanlage (10), die mindestens eine fixierte Struktur (12) aufweist, **dadurch gekennzeichnet, dass** sie mindestens eine bewegbare Unterbaugruppe (30) nach einem der vorstehenden Ansprüche aufweist, die an der fixierten Struktur (12) derart angetrieben und geführt wird, dass der Träger (20) der bewegbaren Unterbaugruppe (30) einer Bahn folgt, die in einer vertikalen Ebene eines fixierten Bezugssystems eine Schleife ausbildet, und, relativ zu einer fixierten Umdrehungsachse (100) senkrecht zu der vertikalen Ebene und parallel zu der Referenzachse (200) eine Drehung um 360° ausführt, während sie einen Umlauf der Schleifenbahn durchläuft.

10. Verfahren zum Führen einer Vergnügungsanlage nach Anspruch 1 in einem eingeschränkten Modus, **dadurch gekennzeichnet, dass** als Reaktion auf ein Erkennen einer Fehlfunktion, während das Ritzel (40) mit dem Zahnkranz (38) kuppelt, ein Vorgehen für eine eingeschränkte Funktionsweise eingeleitet wird, das die folgenden aufeinanderfolgenden Operationen aufweist:
- ein Anhalten des Trägers (20) an der fixierten Struktur (12);
- ein Anlegen der Reibungsbremse (82);
- mittels des Schaltkreises (74), ein Verbinden der Wicklungen (76) der Synchronmaschine (66) mit der ohmschen Schaltung; dann
- mindestens teilweises und vorzugsweise vollständiges Lockern der Reibungsbremse (82), während das Ritzel (40) mit dem Zahnkranz (38) kuppelt, wobei die Kabine durch die Schwerkraft in eine stabile Position an dem Träger (20) gebracht wird.

11. Verfahren zum Führen nach Anspruch 10, **dadurch gekennzeichnet, dass** das Vorgehen für die eingeschränkte Funktionsweise ferner nach dem Anhalten der Kabine (22) in der stabilen Position ein Neustarten des Antriebs des Trägers (20) an der fixierten Struktur (12) aufweist.

12. Verfahren zum Führen nach Anspruch 11, wobei es sich bei der bewegbaren Unterbaugruppe (30) um eine nach einem der Ansprüche 7 bis 8 handelt, **dadurch gekennzeichnet, dass** das Vorgehen für die eingeschränkte Funktionsweise ferner nach dem Anhalten der Kabine (22) in der stabilen Position und vor dem Neustarten des Antriebs des Trägers (20) an der fixierten Struktur (12) eine Verschiebung des Ritzels (40) von der Eingriffsposition mit dem Zahnkranz (38) in die entkoppelte Position aufweist, in der das Ritzel (40) in einem Abstand von dem Zahnkranz (38) und von diesem gelöst ist.

13. Verfahren zum Führen nach Anspruch 12, **dadurch gekennzeichnet, dass** das Ritzel (40) weiterhin mit dem Zahnkranz (38) kuppelt und die Wicklungen der Synchronmaschine nach Neustarten des Antriebs des Trägers (20) an der fixierten Struktur (12) an der ohmschen Schaltung angeschlossen bleiben.

14. Verfahren zum Führen nach einem der Ansprüche 10 bis 13, **dadurch gekennzeichnet, dass** das Vorgehen für die eingeschränkte Funktionsweise unterbrochen ist und ein Hilfsvorgehen für die eingeschränkte Funktionsweise eingeleitet wird, falls eine Fehlfunktion des Vorgehens der eingeschränkten Funktionsweise erkannt wird, wobei das Hilfsvorgehen für die eingeschränkte Funktionsweise die folgenden Operationen aufweist:
- ein Anhalten des Trägers (20) an der fixierten Struktur (12);
- ein Bewegen des Ritzels (40) von der entkoppelten Position in die Eingriffsposition mit dem Zahnkranz (38),
- ein Anlegen der Bremse (82), dann
- ein Neustarten des Antriebs des Trägers (20) an der fixierten Struktur (12).

## Claims

1. Mobile sub-assembly (30) for accommodating and conveying at least one passenger, comprising a support (20), a cabin (22) and a guide (32) for guiding the cabin (22) with respect to the support (20) in rotation about a reference axis (200) which is shared by the support (20) and the cabin (22), the reference axis (200) being horizontal when the mobile sub-assembly (30) is in an operational state, the mobile sub-assembly (30) being provided with at least one stabilization system (36) comprising a ring gear (38) which is secured to the support (20) and centered on the reference axis (200), at least one pinion (40) connected to the cabin (22) so as to mesh with the ring gear (38), a friction brake (82) for braking the rotation of the cabin about the reference axis (200) with respect to the support (20), and motorized drive means (42) which are capable of driving the pinion (40), **characterized in that** the motorized drive means (42) comprise a reversible synchronous machine having permanent magnets (66) and a switching circuit (74) which is capable, in a first switching state, of connecting windings (76) of the synchronous machine (66) to an electrical power supply (78) for driving use of the synchronous machine (66) and, in a second switching state, of connecting the windings (76) of the synchronous machine (66) to a dissipative ohmic circuit (80) for dissipative use of the synchronous machine (66).

2. Mobile sub-assembly (30) according to claim 1, **characterized in that** the switching circuit (74) is monostable, and switches to or remains in the second switching state if the electrical power supply (78) is cut upstream of the switching circuit.

3. Mobile sub-assembly (30) according to claim 2, **characterized in that** the switching circuit (74) comprises a monostable electromechanical or static contactor.

4. Mobile sub-assembly (30) according to any of the preceding claims, **characterized in that** the friction brake (82) is controlled in all or nothing.

5. Mobile sub-assembly (30) according to any of the preceding claims, **characterized in that** the friction brake (82) is controlled by a monostable control unit.

6. Mobile sub-assembly (30) according to claim 5, **characterized in that** the monostable control unit of the friction brake (82) comprises an independent energy source (84) on board the cabin (22).

7. Mobile sub-assembly (30) according to any of the preceding claims, **characterized in that** the pinion (40) is connected to the cabin (22) by a coupling mechanism (46) which is capable of guiding the pinion (40) between a position of engagement with the ring gear, in which the pinion (40) is capable of meshing with the ring gear (38) by rotating about a drive axis (400) which is parallel to the reference axis (200), and an uncoupled position, in which the pinion (40) is spaced apart and disengaged from the ring gear (38).

8. Mobile sub-assembly (30) according to any of the preceding claims, **characterized in that** the stabilization system (36) comprises at least one additional pinion (40) connected to the cabin (22) so as to mesh with a corresponding ring gear consisting of the ring gear (38) or of an additional ring gear secured to the support (20) and centered on the reference axis (200), additional motorized drive means (42) which are capable of driving the additional pinion (40), the additional motorized drive means (42) comprising an additional reversible synchronous machine having permanent magnets (66), and an additional switching circuit (74) which is capable, in a first additional switching state, of connecting windings of the additional synchronous machine (66) to an electrical power supply (78) for driving use of the additional synchronous machine (66) and, in a second additional switching state, of connecting the windings of the additional synchronous machine (66) to a dissipative ohmic circuit for dissipative use of the additional synchronous machine (66).

9. Amusement facility (10) comprising at least one stationary structure (12), **characterized in that** it comprises at least one mobile sub-assembly (30) according to any of the preceding claims which is driven and guided with respect to the stationary structure (12) such that the support (20) of the mobile sub-assembly (30) follows a path which forms a loop in a vertical plane of a stationary reference system, and makes, with respect to a stationary revolution axis (100) which is perpendicular to the vertical plane and parallel to the reference axis (200), a rotation of 360° by traversing a turn of the path in a loop.

10. Method for controlling an amusement facility according to claim 1 in degraded mode, **characterized in that**, in response to detecting a malfunction while the pinion (40) meshes with the ring gear (38), a degraded operating procedure is initiated that comprises the following successive operations:
- stopping the support (20) with respect to the stationary structure (12);
- applying the friction brake (82);
- connecting the windings (76) of the synchronous machine (66) to the ohmic circuit by means of the switching circuit (74); then
- at least partially, and preferably totally, releasing the friction brake (82) while the pinion (40) meshes with the ring gear (38), the cabin being brought by gravity into a stable position with respect to the support (20).

11. Control method according to claim 10, **characterized in that** the degraded operating procedure further comprises, after stopping the cabin (22) in the stable position, restarting the driving of the support (20) with respect to the stationary structure (12).

12. Control method according to claim 11, the mobile sub-assembly (30) being according to either claim 7 or claim 8, **characterized in that** the degraded operating procedure further comprises, after stopping the cabin (22) in the stable position, and before restarting the driving of the support (20) with respect to the stationary structure (12), displacing the pinion (40) from the position of engagement with the ring gear (38) to the uncoupled position, in which the pinion (40) is remote and disengaged from the ring gear (38).

13. Control method according to claim 12, **characterized in that** the pinion (40) continues to mesh with the ring gear (38) and the windings of the synchronous machine remain connected to the ohmic circuit after restarting the driving of the support (20) with respect to the stationary structure (12).

14. Control method according to any of claims 10 to 13, **characterized in that** the degraded operating procedure is interrupted and a subsidiary degraded operating procedure is initiated if a malfunction condition of the degraded operating procedure is detected, the subsidiary degraded operating procedure comprising the following operations:
- stopping the support (20) with respect to the stationary structure (12);
- moving the pinion (40) from the uncoupled position to the position of engagement with the ring gear (38);
- applying the brake (82); then
- restarting the driving of the support (20) with respect to the stationary structure (12).
